# EUROPÄISCHE PATENTANMELDUNG

(11) **EP 2 096 699 A2**
(43) Veröffentlichungstag der Anmeldung: **02.09.2009**
(21) Anmeldenummer: 09002568.5
(22) Anmeldetag: 24.02.2009
(51) Int. Cl.: H01M 8/02, H01M 8/04

(54) **Temperaturregelanlage für Brennstoffzellen und Verfahren zur Temperaturregelung von Brennstoffzellen**

(30) Priorität: 26.02.2008 DE 102008011235
(71) Anmelder: DBK David + Baader GmbH, 76870 Kandel (DE)
(72) Erfinder: Gschwind, Thomas, 67098 Bad Dürkheim (DE)
(74) Vertreter: Polte, Willi

(57) **Zusammenfassung**

Die Erfindung betrifft eine Temperaturregelanlage für Brennstoffzellen sowie ein Verfahren zur Regelung der Betriebstemperatur einer Brennstoffzelle. Um die Betriebstemperatur der Brennstoffzelle möglichst schnell auf einen in einem Solltemperaturbereich liegenden Wert bringen und in diesem Beriech halten zu können, ist erfindungsgemäß vorgesehen, dass die Temperaturregelanlage zumindest eine elektrische Heizvorrichtung (2) umfasst, die zusammen mit wenigstens einem Kühlelement einen Temperierstapel ausbildet.

## Beschreibung

Die Erfindung betrifft eine Temperaturregelanlage für Brennstoffzellen, mit wenigstens einer elektrischen Heizvorrichtung und mit zumindest einem Kühlelement, wobei die Heizvorrichtung und das Kühlelement über eine Wärmebrücke mit mindestens einem die Temperaturregelanlage durchsetzenden Temperierkanal verbunden sind, der Temperierkanal Fluid leitend mit einer von einem ein Temperierfluid leitenden Temperierkreislauf zumindest zwischen der Temperaturregelanlage und der Brennstoffzelle gebildeten Wärmetransportleitung verbindbar ist.

Die Erfindung betrifft ferner ein Verfahren zum Regeln einer Betriebstemperatur einer Brennstoffzelle, bei dem ein Wärmefluss von einer Heizvorrichtung über eine Wärmetransportleitung zur Brennstoffzelle geleitet und die Heizvorrichtung aus einer elektrischen Energiequelle oder einem Energiespeicher gespeist wird, wenn die Betriebstemperatur unterhalb einer ersten Solltemperatur liegt, und bei dem beim Überschreiten einer zweiten Solltemperatur der Wärmefluss von der Brennstoffzelle über die Wärmetransportleitung an ein Kühlelement geleitet wird.

Temperaturregelanlagen zur Kühlung von Energiewandlern für Kraftfahrzeuge, wie etwa Verbrennungsmotoren, sind allgemein bekannt. Von der Kühlanlage wird ein dort gekühltes Kühlmittel, beispielsweise Wasser, durch einen geschlossenen Kühlmittelkreislauf dem Energiewandler zugeführt, der Wärme an das Kühlmittel abgibt.

Der Vorteil von Brennstoffzellen liegt darin, dass sie Energie mit geringeren Wärmeverlusten und auch bei niedrigeren Betriebstemperaturen als Verbrennungsmotoren wandeln. Daraus ergibt sich jedoch das Problem, dass die bisher eingesetzten Temperaturregelanlagen die Betriebstemperatur der Brennstoffzelle nicht angemessen beeinflussen. Eine Brennstoffzelle, insbesondere wenn sie in einem Kraftfahrzeug verwendet wird, erwärmt sich durch die geringen Wärmeverluste langsamer als der Verbrennungsmotor, wodurch die Betriebstemperatur der Brennstoffzelle erst nach einer relativ langen Zeit einen Solltemperaturbereich erreicht. Zusätzlich ist es mit den vorhandenen Kühlanlagen problematisch, die Betriebstemperatur in diesem Solltemperaturbereich zu halten.

Kühlanlagen für Brennstoffzellen oder für andere Komponenten von Brennstoffzellensystemen sind in den Druckschriften DE 10 2006 005 176 A1, DE 11 2006 001 348 T5, DE 11 2005 000 360 T5, DE 11 2004 002 618 T5, DE 102 35 464 A1, DE 101 07 596 B4 und DE 199 31 061 A1 beschrieben. Diese verwenden ein komplexes Leitungssystem, um das Temperierfluid zu der Heizvorrichtung und zu dem Kühlelement zu transportieren. Hierbei wird das Temperierfluid je nach Anwendung über zusätzliche Umgehungsleitungen wenigstens teilweise an der Heizvorrichtung und dem Kühlelement vorbeigeleitet. Komplexe Leitungssysteme benötigen viel Raum. Dieser ist in modernen Automobilen jedoch knapp.

Daher ist es die Aufgabe der Erfindung eine Temperaturregelanlage für Brennstoffzellen und ein Verfahren zur Betriebstemperaturregelung bereitzustellen, die ein möglichst schnelles Erreichen einer ersten Solltemperatur und eine Regelung der Betriebstemperatur der Brennstoffzelle zwischen der ersten und einer zweiten Solltemperatur im Betrieb der Brennstoffzelle gewährleistet, ohne dass die Temperaturregelanlage viel Raum benötigt.

Für die eingangs genannte Temperaturregelanlage wird die Aufgabe erfindungsgemäß dadurch gelöst, dass der Temperierkanal, das Kühlelement und die Heizvorrichtung einen Temperierstapel ausbildend zusammengefügt sind. Die Aufgabe wird für das eingangs genannte Verfahren erfindungsgemäß dadurch gelöst, dass der Wärmefluss über wenigstens eine erfindungsgemäße Temperaturregelanlage geleitet wird.

Durch diese Maßnahmen ist es möglich, die Brennstoffzelle schneller als durch ihre Selbsterwärmung allein bis zu der ersten Solltemperatur zu erwärmen und die Betriebstemperatur der Brennstoffzelle im durch die erste und die zweite Solltemperatur gekennzeichneten Solltemperaturbereich zu halten, wobei die Temperaturregelanlage kompakt ausgestaltet ist.

Die erfindungsgemäße Lösung kann durch verschiedene, jeweils für sich vorteilhafte, beliebig miteinander kombinierbare Ausgestaltungsformen weiter verbessert werden. Auf diese Ausgestaltungsformen und die mit ihnen verbundenen Vorteile wird im Folgenden eingegangen.

So kann durch eine Wärmetransportleitung Wärme zwischen der Brennstoffzelle und der Temperaturregelanlage fließen. Die Wärmetransportleitung kann von einem Temperierkreislauf gebildet sein, der die Temperaturregelanlage und die Brennstoffzelle umfassen kann. Die Brennstoffzelle kann Wärme auch über einen Wärmetauscher mit dem Temperierkreislauf austauschen.

Bei der erfindungsgemäßen Temperaturregelanlage sind wenigstens eine elektrische Heizvorrichtung und zumindest ein Kühlelement über eine Wärmebrücke mit mindestens einem die Temperaturregelanlage durchsetzenden Temperierkanal verbunden, der Fluid leitend mit einer von einem ein Temperierfluid leitenden Temperierkreislauf zumindest zwischen der Temperaturregelanlage und der Brennstoffzelle gebildeten Wärmetransportleitung verbindbar ist.

Beim erfindungsgemäßen Verfahren wird zum Regeln einer Betriebstemperatur einer Brennstoffzelle ein Wärmefluss von einer Heizvorrichtung über eine Wärmetransportleitung zur Brennstoffzelle geleitet und die Heizvorrichtung aus einer elektrischen Energiequelle oder einem Energiespeicher gespeist, wenn die Betriebstemperatur unterhalb einer ersten Solltemperatur liegt, und beim Überschreiten einer zweiten Solltemperatur wird der Wärmefluss von der Brennstoffzelle über die Wärmetransportleitung an ein Kühlelement geleitet.

Ein Temperierkanal kann als Teil des Temperierkreislaufs mit der Heizvorrichtung und dem Kühlelement wärmeleitend verbunden und von diesen jeweils einzeln oder gemeinsam beidseitig umschlossen sein. Diese Komponenten der Temperieranlage können parallel zu einer Längsrichtung des Temperierkanals angeordnet sein und zusammen einen Temperierstapel bilden.

Der Temperierkanal kann beispielsweise aus einem wärmeleitenden Metall, wie etwa Aluminium, bestehen, mit dem Wärme von der Heizvorrichtung aufnehmbar und an das Kühlelement abgebbar ist. Besonders vorteilhaft ist es, wenn durch den Temperierkanal und den restlichen Teil des Temperierkreislauf, der auch die Brennstoffzelle, die Temperaturregelanlage und wenigstens eine Wärmetransportleitungen umfasst, ein Temperierfluid fließen kann. Die Wärmetransportleitungen leiten Wärme zwischen der Brennstoffzelle und dem Temperiermodul.

Als Temperierfluid kann etwa Wasser oder ein Alkohol beziehungsweise ein Flüssigkeits- oder Gasgemisch verwendet werden, das die Wärme in der Brennstoffzelle und/oder in der Temperaturregelanlage aufnehmen und abgeben kann und das durch das Temperiermodul transportiert wird. Für den Transport des Temperierfluids können der Kanal und die Wärmetransportleitungen eine sich in ihrer Längsrichtung erstreckende Öffnung aufweisen, durch die das Wärmetransportmittel fließen kann.

Jedoch können auch Stoffe als Temperierfluid verwendet werden, die zum Wärmetransport ihren Aggregatzustand ändern und insbesondere zur Wärmeaufnahme verdampfen und zur Wärmeabgabe kondensieren.

Das Kühlelement kann zur verbesserten Abgabe der Wärme an das Kühlmittel von diesem durchströmbar ausgestaltet sein. Dabei kann sich mindestens ein Durchströmungskanal beispielsweise parallel zur Längsrichtung des Temperierkanals erstrecken. Um die Effizienz der Wärmeübertragung an das Kühlmittel zu verbessem, kann es vorteilhaft sein, wenn sich der Durchströmungskanal quer zur besagten Längsrichtung erstreckt.

In die Öffnung des Durchströmungskanals können sich Wärmeverteilungsstrukturen erstrecken, die beispielsweise rippen- oder gitterförmig ausgestaltet und aus einem wärmeleitenden Material, wie etwa Aluminium, gefertigt sein können. Um den Strömungswiderstand des Kühlmittels durch den Durchströmungskanal nicht unnötig zu erhöhen und um eine hohe Wärmeabgabe an das Kühlmittel zu erreichen, ist es vorteilhaft, wenn die Stege quer zur Strömungsrichtung des Wärmeaufnahmemediums einen geringen Querschnitt und in Strömungsrichtung eine große Fläche aufweisen. Insbesondere mäander- oder schlaufenförmig angeordnete Kühlrippen oder -lamellen ermöglichen eine effektive Wärmeabgabe an das Kühlmittel.

Die Heizvorrichtung kann mehrere Heizelemente umfassen, die entlang der Längsrichtung des Temperierkanals miteinander form-, kraft- oder stoffschlüssig verbunden sind. Werden diese Heizelemente als eine Einheit in die Temperaturregelanlage integriert, ist dessen Steuerung beziehungsweise Regelung nach wie vor mit geringen Aufwand realisierbar. Jedoch kann es auch vorteilhaft sein, einzelne Heizelemente anders anzusteuern als andere, um beispielsweise Temperaturprofile entlang des mit dem Heizelement verbundenen Temperierkanals zu erzeugen oder einzelnen Heizelemente zu deaktivieren, wenn diese beispielsweise nicht richtig funktionieren. Um eine Überhitzung des Heizelementes oder anderer Komponenten der Temperaturregelanlage beziehungsweise der Brennstoffzelle zu verhindern, kann die Heizvorrichtung elektrische Energie über wenigstens ein Heizelement beispielsweise in Form eines PTC-Widerstandes, dessen elektrischer Widerstand mit seiner Temperatur steigt, wandeln, da der PTC-Widerstand die maximale Wärmeabgabe selbstständig begrenzt. Ist ein Überhitzungsschutz beispielsweise in Form wenigstens eines PTC-Elements vorhanden, können die Heizelemente auch beispielsweise als Heizdrähte oder Dickschichtheizelemente ausgestaltet sein. In der Regel ist dann jedoch ein Überhitzungsschutz vorzusehen.

Zur Verbesserung der Wärmeleitfähigkeit zwischen der Heizvorrichtung und dem Temperierkanal können deren zueinander gewandte und zumindest im Betrieb miteinander verbundene Flächen zueinander komplementär ausgebildet sein.

Um die thermische Kopplung zwischen den beiden Komponenten Heizvorrichtung und Temperierkanal zu verbessern ist es vorteilhaft, die Oberfläche der miteinander verbundenen Seiten zu vergrößern. Dazu können die Seiten mit ihre Oberfläche vergrößernden geometrischen Strukturen ausgestaltet oder mit Elementen, die eine derart ausgeformte Oberfläche aufweisen, versehen werden.

Zur weiteren Optimierung der Wärmeleitung von der Heizvorrichtung zum Temperierkanal kann ein Wärmeleitmedium, wie etwa Wärmeleitpaste, auf zumindest eine der gegenüberliegenden Flächen aufgetragen werden.

Auch die Grenzflächen des Kühlelementes und die diesen zugewandten Flächen des Temperierkanals können wie die sich gegenüberstehenden Flächen der Heizvorrichtung und der Heizvorrichtung ausgeformt sein. Das Kühlelement kann mit dem Temperierkanal und der Heizvorrichtung einen Temperierstapel bilden. Insbesondere können das Kühlelement und der Temperierkanal das Heizelement umschließen.

Die Komponenten der Temperierschicht können auch anders angeordnet und miteinander form-, kraft- oder stoffflüssig wärmeleitend verbunden sein. Beispielsweise können die Komponenten durch einen Halterahmen zusammengehalten werden. Dabei kann der Halterahmen Dichtungs- und/oder Kontaktelemente zum Anschluss der Komponenten an Energie-, Steuer- und/oder Medienkreisläufe aufweisen.

Auch kann das Heizelement beidseitig von zwei Kühlelementen umschlossen sein, die auf ihrer vom Heizelement abgewandten Seite mit einem Temperierkanal wärmeleitend verbunden sein können. Durch eine solche Anordnung vergrößert sich die Wärmeübertragungsfläche zwischen dem Heizelement und den Kühlelementen, wodurch eine effektivere Wärmeabgabe vom Heizelement ermöglicht wird.

Um die Komponenten elektrisch voneinander zu trennen und so einen unerwünschten Stromfluss zwischen den Komponenten zu vermleiden, kann zumindest zwischen dem Heizelement und dessen benachbarten Komponenten eine elektrische Isolationsschicht angeordnet sein. Diese Isolationsschicht kann auch wenigstens die Heizelemente umhüllen. Um nicht den Wärmeaustausch durch die elektrische Isolationsschicht zu behindern, kann diese als Wärmebrücke ausgestaltet sein.

Soll der Wärmeaustausch verbessert werden, kann auch auf die den unerwünschten Stromfluss zwischen den Komponenten verhindernden Isolationsschichten verzichtet werden, wenn an den Komponenten entsprechende und insbesondere gleiche elektrische Potenziale angelegt sind. Durch diese Maßnahme geht der Stromfluss zwischen den Komponenten gegen Null.

Alternativ können wenigstens die das Heizelement umgebenden Komponenten auch aus einem elektrisch isolierenden Material mit einer hohen Wärmeleitfähigkeit gefertigt sein.

Auch kann es vorteilhaft sein, die Komponenten in einer anderen Anzahl zu einem Temperierstapel zusammenzufügen. Ist eine stärkere Erwärmung des Wärmetransportmediums nötig, kann ein Temperierkanal von zwei oder mehr Heizvorrichtungen umgeben sein. Ist das Temperierfluid stärker zu kühlen, können mehrer Kühlelemente mit dem Temperierkanal verbunden sein. Dabei ist es besonders vorteilhaft, wenn immer wenigstens eine Heizvorrichtung und zumindest ein Kühlelement mit dem Temperierkanal verbunden ist, da so das durch den Temperierkanal fließenden Temperierfluid und somit auch die Brennstoffzelle erwärmt und gekühlt werden kann.

Ein Temperiermodul, das mehrere Temperierstapel aufweisen kann, die miteinander kraft-, form- oder stoffschlüssig verbunden und einzeln oder gemeinsam ansteuerbar sein können, kann durch einen Halterahmen verbunden sein. Dieser Halterahmen kann auch Montageelemente und Anschlussvorrichtungen aufweisen, die mit Halterungen, Medien-, Versorgungs- und/oder Steuerkreisläufen verbindbar sein können. Jedoch kann das Temperiermodul auch selbst mit den Montagemitteln und den Anschlussvorrichtungen ausgeformt sein. Auch kann das Temperiermodul nur einen Temperierkanal umfassen, der mäanderförmig durch das Temperiermodul verläuft. Zwischen den parallel zueinander verlaufenden Teilen des Temperierkanals können Heizvorrichtungen und Kühlelemente angeordnet sein.

Sollten Platzerfordemisse oder andere Rahmenbedingungen voraussetzen, dass sich das Temperiermodul nicht geradlinig erstreckt, kann dieses auch gekrümmt verlaufen, wobei sich der Krümmungsradius im Verlauf des Temperiermaduls ändern kann.

Um den Fluss des Temperierfluids und damit den Wärmetransport verändern zu können, kann im Verlauf des Temperierkreislaufs zumindest eine Reguliereinheit vorgesehen sein, mit der der Wärmetransport vom Temperiermodul zur Brennstoffzelle änderbar ist. Insbesondere kann mit der Reguliereinheit die Füeßgeschwindigkeit des Temperierfluids variiert werden. Die Reguliereinheit kann beispielsweise als eine Fluidpumpe oder als ein Regelventil ausgestaltet sein. Die Reguliereinheit kann an verschiedenen Orten im Temperierkreislauf, wie etwa in einer der Wärmetransportleitungen, in der Brennstoffzelle oder in der Temperaturregelanlage angeordnet sein.

Die Geschwindigkeit und die Temperatur des Temperierfluids können größtenteils unabhängig voneinander oder miteinander verknüpft von der Reguliereinheit und der Heizvorrichtung änderbar sein, was ein breites Spektrum an Temperaturänderungen der Brennstoffzelle in einem vorbestimmten Zeitraum ermöglicht.

Um die Menge der über das Kühleelement abgebbaren Wärme beeinflussen zu können, kann eine Leiteinheit für Kühlmittel in dessen Strömungsrichtung vor dem Temperiermodul vorgesehen sein. Mit dieser Leiteinheit kann der Strömungsvektor und insbesondere die Strömungsrichtung des Kühlmittels beeinflusst werden. Die Leiteinheit kann zum Temperiermodul beabstandet, mit diesem in Kontakt oder auch in dieses beziehungsweise in dessen Halterahmen integriert sein kann. Die Leiteinheit weist Lenkmittel auf, die dessen durch das Kühlmittel durchströmbaren Querschnitt verkleinern können. Diese Lenkmittel können als verfahrbare Riegel oder um eine Achse, die auch quer zur Strömungsrichtung verlaufen kann, rotierbare Klappen ausgeformt sein, die den Durchströmungsquerschnitt in Abhängigkeit von ihrer Position oder Stellung verändern können.

Um beispielsweise mehrere Wärmeerzeuger gemeinsam, aber unterschiedlich durch die Temperaturregelanalge zu temperieren, können die Lenkmittel in begrenzten Durchströmungsbereichen anders eingestellt werden als in anderen Bereichen. So sind unterschiedliche Wärmemengen in verschiedenen Bereichen des Temperiermoduls abführbar. Die Leiteinheit kann im Wesentlichen senkrecht zur Strömungsrichtung des Kühlmittels ausgerichtet sein und sowohl gerade als auch gewölbt verlaufen.

Um die Strömungsgeschwindigkeit des Kühlmittel erhöhen zu können, kann die Leiteinheit mit einer Fördereinrichtung für Kühlmittel, etwa einen Ventilator, verbunden sein. Die Fördereinrichtung kann in Strömungs- beziehungsweise Förderrichtung des Kühlmittels vor oder nach der Leiteinheit angeordnet sein. Eine Zuführung des Kühlmittels zum Temperiermodul kann auch dann gewährleistet sein, wenn das Kühlmittel ohne Unterstützung nicht ausreichend schnell strömt. Dies kann beispielsweise der Fall sein, wenn die Temperaturregelanalge wie ein luftgekühlter Kühler in einem Kraftfahrzeuge angeordnet ist und das Kraftfahrzeug steht beziehungsweise nur mit geringer Geschwindigkeit fährt.

Um das Temperiermodul weiter in die Brennstoffzelle beziehungsweise in die mit ihr verbundenen Einrichtungen zu integrieren, kann es vorteilhaft sein, zumindest das Kühlelement in einer Prozessluftführungsstrecke des Fahrzeuges oder der Brennstoffzelle anzuordnen. Die Prozessluftführungsstrecke kann zum Beispiel Umgebungsluft als Prozessluft zur Brennstoffzelle am Kühlelement vorbei oder durch es hindurch leiten.

Die Prozessluftführungsstrecke kann auch Einrichtungen zum Verdichten und/oder Ändern des Feuchtigkeitsgehaltes der Umgebungsluft aufweisen.

Hier kann es sinnvoll sein, wenn das Kühlelement zwischen diesen Einrichtungen und der Brennstoffzelle angeordnet ist, da das Kühlelement dann im Betrieb zumindest teilweise mit der Prozessluft mit ihrem definierten Feuchtigkeitsgehalt in Kontakt ist.

Wird die komplette Prozessluft durch die Leiteinheit und/oder das Kühlelement geleitet, ist bei der Änderung des Strömungsvektors darauf zu achten, dass immer eine von der Brennstoffzelle benötigte Menge Prozessluft durch die Leiteinheit strömen kann. Insbesondere der Strömungsquerschnitt der Leiteinheit soll hierzu nicht beispielsweise durch die Lenkmittel zu sehr verkleinert werden.

Ein Energiespeicher kann Bewegungsenergie eines Kraftfahrzeuges, die bei einem Bremsvorgang mit einem Energiewandler, beispielsweise in Form eines Generators, in elektrische Energie gewandelt wird, speichern. Das Temperiermodul oder dessen Komponenten, die Reguliereinheit, die Leiteinheit oder die Fördereinrichtung können über diesen Energiespeicher mit Energie versorgbar sein.

Anfallende Bremsenergie kann in Form elektrischer Energie in den Energiespeicher geleitet und dort gespeichert werden. Ist ausreichend Energie im Energiespeicher enthalten, kann unter anderem die Temperaturregelanlage mit dieser Bremsenergie betrieben werden. Enthält der Energiespeicher keine Bremsenergie, kann die Temperaturregelanlage auch aus anderen elektrischen Energiequellen und insbesondere mit in der Brennstoffzelle erzeugter elektrischer Energie versorgt werden. Hierzu kann beispielsweise die Brennstoffzelle elektrische Energie in den Energiespeicher leiten, aus dem die Temperaturregelanlage versorgt wird.

Fällt elektrische Bremsenergie an, die jedoch nicht gespeichert werden kann oder soll, weil etwa der Energiespeicher voll ist, kann die gesamte anfallende elektrische Bremsenergie der Temperaturregelanlage zugeführt und zum Betrieb verwendet oder als Wärmeenergie gewandelt abgeführt werden.

Die Einstellungen zumindest der im vorherigen Absatz genannten Komponenten können von einer Kontroll- oder Steuerungseinheit in Abhängigkeit von der Temperatur der Brennstoffzelle oder anderen Parametern, wie etwa der Einstellung einer mit der Temperaturregelanlage verbundenen Klimaanlage, einer Energiespeicherübewachungseinheit oder anderen mit der Temperaturregelanlage kommunizierenden Funktionseinheiten des Kraftfahrzeuges, geregelt werden. Dazu ist die Kontrolleinheit zumindest mit wenigstens einem Temperatursensor, mit dem Heizelement, mit einer Leiteinheit und mit einem Reguliereinheit messend, steuernd und/oder leistungsregulierend verbunden. Der Temperatursensor kann die Temperatur der Brennstoffzelle messen und in der Brennstoffzelle angeordnet oder mit dem Temperierkanal thermisch leitend verbunden sein.

Die Kontrolleinheit kann in eine Steuereinheit integriert sein, die ebenfalls andere Abläufe im Kraftfahrzeug regelt beziehungsweise steuert, in der Temperaturregelanlage oder auch separat beziehungsweise als Bestandteil der Brennstoffzelle ausgestaltet sein und auch mit anderen Steuereinheiten des Kraftfahrzeuges datenübertragend verbunden sein.

Liegt die Temperatur der Brennstoffzelle außerhalb des Solltemperaturbereichs, kann der Brennstoffzelle mithilfe der Temperaturregelanlage Wärme zu- oder abgeführt werden.

Wenn die Temperatur der Brennstoffzelle beispielsweise nach einem Start des Kraftfahrzeuges unterhalb des Solltemperaturbereichs liegt, so kann die Heizvorrichtung mit elektrischer Energie versorgt werden. Das Heizelement wandelt die elektrische in Wärmeenergie und gibt diese an den Temperierkanal ab. Über den Temperierkanal kann die Wärme zur Brennstoffzelle transportiert werden. So kann beispielsweise die Brennstoffzelle vor ihrem Start vorgewärmt werden.

Wird zum Wärmetransport ein Temperierfluid verwendet, dann dieses von der Reguliereinheit durch den Temperierkreislauf befördert werden.

Um eine möglichst effektive Ausnutzung der Energie zur Erwärmung der Brennstoffzelle gewährleisten zu können und zu verhindern, dass die Wärme über das Kühlelement abfließt, ist es vorteilhaft das Kühlmittel an der Wärmeaufnahme zu hindern und es beispielsweise nicht durch das Leitmittel zum Kühlelement zu leiten.

Hat die Betriebstemperatur der Brennstoffzelle den Solltemperaturbereich erreicht, kann der Wärmetransport zu der Brennstoffzelle unterbrochen werden und die Versorgung der Heizvorrichtung mit elektrischer Leistung beendet werden. Die Reguliereinheit pumpt das Temperierfluid nicht mehr durch den Temperierkreiskreislauf oder verringert ihren Strömungsdurchmesser bis der Temperierkreislauf unterbrochen ist.

Um beispielsweise jetzt die Wärme innerhalb der Brennstoffzelle besser verteilen zu können, kann die Temperaturregelanlage vom Temperierkreislauf abgekoppelt und der Temperierkreislauf über eine zuschaltbare Nebenleitung geschlossen werden. Dieser Temperierkreislaufteil kann die Reguliereinheit umfassen, die das Temperierfluid strömen lässt. So kann hier die Wärme zu einem Temperatursensor, der außerhalb der Brennstoffzelle wärmeleitend mit dem Temperierkreislaufteil verbunden ist, transportiert werden.

Liegt die Temperatur der Brennstoffzelle oberhalb des Solltemperaturbereichs, kann überschüssige Wärme der Brennstoffzelle über den Temperierkanal an die Temperaturregelanlage abfließen und dort an das an dem Kühlelement vorbei oder durch es hindurchströmende Kühlmittel abgegeben werden. Dazu fördert die Reguliereinheit das Temperierfluid durch den Temperierkreislauf und das Leitmittel führt das Kühlmittel zumindest teilweise zum Temperiermodul. Strömt das Kühlmittel langsamer als mit der vorgegebenen Mindestgeschwindigkeit oder reicht dessen vorhandene Strömungsgeschwindigkeit nicht aus, kann diese durch die Fördereinrichtung erhöht werden.

Das nach der Wärmeaufnahme erwärmte Kühlmittel kann nicht nur zum Abtransport der Wärme an die Umgebung, sondern auch zur Weiterleitung der Wärme an andere Wärmeverbraucher des Kraftfahrzeuges genutzt werden. So kann beispielsweise das Kühlmittel die Wärme an vorbeiströmende Luft abgeben. Diese kann direkt in das Innere des Fahrzeuges geleitet und so der Fahrgastinnenraum beheizt werden. Besteht das Kühlmittel aus Luft, kann es direkt in den Innenraum geleitet werden.

Auch können andere Fluide, wie etwa Scheibenreinigungsflüssigkeit, beheizt werden, um zum Beispiel ein Gefrieren der Flüssigkeit zu verhindern. Dazu kann die Flüssigkeit durch die Temperaturregelanlage geleitet werden. Alternativ kann die Abwärme der Temperaturregelanlage beispielsweise dem Scheibenreinigungsflüssigkeitsbehälter zugeleitet werden. Sollen weitere Wärmeerzeuger oder Wärmeverbraucher, wie beispielsweise ein Verbrennungsmotor, temperiert werden, kann dieser wärmeleitend mit der Temperaturregelanlage verbunden sein. Insbesondere kann ein Wärmetransportmedium des Wärmeverbrauchers beziehungsweise Wärmeerzeugers ebenfalls mit der Temperaturregelanlage temperiert werden.

Bremsenergie in Form elektrischer Energie, die nicht gespeichert werden kann oder soll und die von keinem Energieverbraucher benötigt wird, kann über die Heizvorrichtung und das Kühlelement an das Kühlmittel abgeführt werden. Hierzu kann die Bewegungsenergie über die Heizvorrichtung dem Kühlelement zugeführt werden, welches die Bewegungsenergie an das Kühlmittel leitet. Dazu kann es vorteilhaft sein, das Kühlmittel dem Kühlelement mit wenigstens einer minimalen Strömungsgeschwindigkeit zuzuleiten. Die Reguliereinheit leitet das Temperierfluid nicht zur Brennstoffzelle, es sei denn, dass deren Temperatur unterhalb des Solltemperaturbereichs liegt. Die Leiteinheit und gegebenenfalls auch die Fördereinrichtung leiten Kühlmittel zum Temperiermodul, das die Wärme aufnimmt und abführt. Die Heizvorrichtung arbeitet in diesem Zustand als ein sogenannter Bremswiderstand und kann als ein solcher ausgestaltet sein.

Die Bewegungsenergie kann über die Heizvorrichtung und das Kühlelement wenigstens teilweise an der Brennstoffzelle vorbei an die Umgebung des Kühlelementes abgegeben werden, wenn die Temperatur der Brennstoffzelle unterhalb der zweiten Solltemperatur liegt.

Fällt keine Bremsenergie an, kann das Heizelement auch aus anderen Energiequellen, insbesondere dem Energiespeicher, der in Form einer aufladbaren Batterie ausgestaltet sein kann, oder der Brennstoffzelle, die ebenfalls elektrische Energie erzeugen kann, versorgt werden. Auch eine außerhalb des Fahrzeuges gelegene Energiequelle, beispielsweise ein an das reguläre Stromnetz angeschlossenes Netzteil, kann insbesondere bei Stillstand des Fahrzeuges zur Versorgung des Heizelementes oder der anderen Komponenten der Temperaturregelanlage verwendet werden.

Die beschriebenen Einstellungen können anders kombiniert werden oder die einzelnen Einstellungen stufenweise oder stufenlos zwischen ihren Maximaleinstellungen eingestellt werden, die beispielsweise als Wärmetransport durch Temperierkanal "Maximal" oder "Aus" darstellbar sein können.

Im Folgenden wird die Erfindung beispielhaft anhand von Ausführungsformen mit Bezug auf die Zeichnungen erläutert. Die unterschiedlichen Merkmale der Ausführungsformen können dabei unabhängig voneinander kombiniert werden, wie es bei den einzelnen vorteilhaften Ausgestaltungen bereits dargelegt wurde.

Es zeigen:
- Fig. 1: eine schematische Darstellung eines ersten Ausführungsbeispiels dreier Komponenten der Erfindung;
- Fig. 2: eine schematische Darstellung eines weiteren Ausführungsbeispiels der Erfindung, das sich von dem in der Figur 1 gezeigten Ausführungsbeispiel dadurch unterscheidet, dass die drei Komponenten zusammengefügt sind;
- Fig. 3: eine schematische Darstellung eines dritten Ausführungsbeispiels der Erfindung, die sich von den bisherigen Ausführungsbeispielen durch eine geänderte Anordnung der Komponenten unterscheidet;
- Fig. 4: eine schematische Darstellung eines vierten Ausführungsbeispiels der Erfindung;
- Fig. 5: eine schematische Darstellung eines fünften Ausführungsbeispiels der Erfindung;
- Fig. 6: eine schematische Darstellung eines sechsten Ausführungsbeispiels der Erfindung, die sich durch eine zusätzliche Brennstoffzelle unterscheidet;
- Fig. 7: eine schematische Darstellung eines siebten Ausführungsbeispiels der Erfindung, die sich von den bisherigen Ausführungsbeispielen durch eine zusätzliche Wärmeaufnahmemedienlenkeinheit unterscheidet;
- Fig. 8: eine schematische Darstellung eines achten Ausführungsbeispiels der Erfindung, in der die Wärmeaufnahmemedienlenkeinheit für Wärmeaufnahmemedien nicht durchlässig ist;
- Fig. 9: eine schematische Darstellung eines neunten Ausführungsbeispiels der Erfindung, das sich von den bisherigen Ausführungsbeispielen durch eine zusätzliche Steuerungseinheit unterscheidet;
- Fig. 10: eine schematische Darstellung von Betriebszustandsbeispielen der Erfindung.

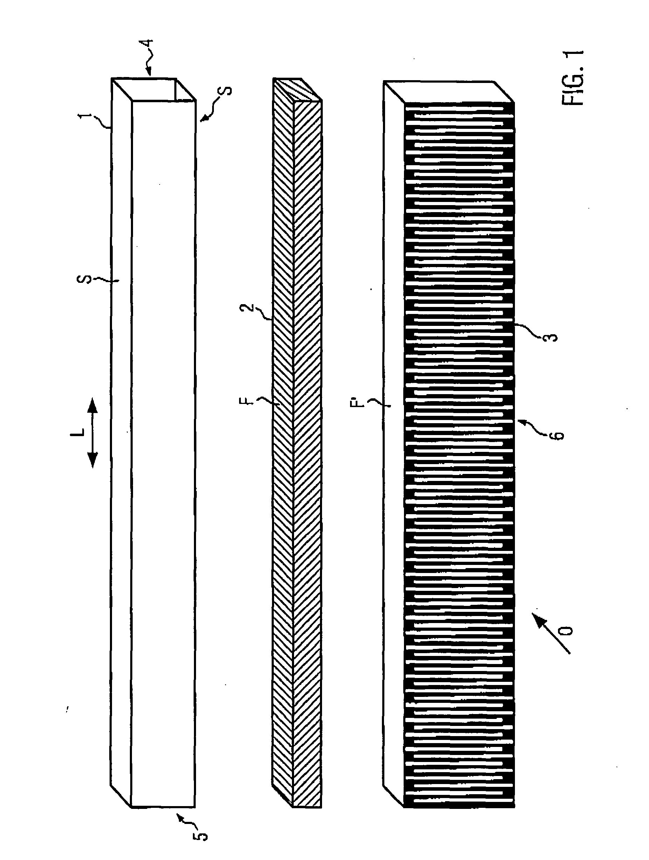

Zunächst werden Aufbau und Funktion einer erfindungsgemäßen Temperaturregelanlage für Brennstoffzellen mit Bezug auf das Ausführungsbeispiel der Figur 1 beschrieben. Hier sind schematisch drei Komponenten der Temperaturregelanlage gezeigt: ein Temperierkanal 1, eine elektrische Heizvorrichtung 2 und ein für ein Gas, wie etwa Luft, durchströmbares Kühlelement 3.

Alle drei Komponenten haben hier identische rechteckige Grundflächen und einen quadertörmigen Aufbau. An den in Längsrichtung L weisenden Enden 4, 5 des Temperierkanals 1 mündet eine durchgehende Öffnung, durch die ein Temperierfluid strömen kann. Der hier einen rechteckigen Querschnitt aufweisende Temperierkanal 1 kann beispielsweise auch rund, oval oder beliebig zylinderförmig ausgeformt sein oder anstelle der ebenen unebene und insbesondere die Oberfläche vergrößernde Seitenflächen S aufweisen. Auch kann der Temperierkanal 1 innen wie außen beispielsweise mit rippenförmigen Elementen ausgestaltet sein. Wenn beispielsweise die Einbaubedingungen oder sonstige Funktions- oder Designbedingungen eine andere als die gezeigte gerade Ausformung entlang der Längsrichtung L erfordern, kann der Temperierkanal 1 auch gekrümmt verlaufen, wobei sich der Krümmungsradius im Verlauf des Temperierkanals 1 ändern kann.

Die elektrische Heizvorrichtung 2 ist hier beispielsweise als ein Heizelement in Form eines PTC-Widerstandes ausgeformt gezeigt, dessen elektrischer Widerstand mit größer werdender Temperatur ansteigt. Das Heizelement 2 ist über zwei hier nicht gezeigte Anschlussleitungen mit einer Energiequelle elektrisch leitend verbindbar. Auch andere elektrische Heizelemente, wie etwa Heizdrähte oder Dickschichtheizelemente, sind möglich. Die Heizvorrichtung 2 kann auch aus einer Vielzahl von Heizelementen bestehen und entlang der Längsrichtung L gestapelt und einzeln, in Gruppen oder zusammen ansteuerbar sein. Diese Heizelemente können beispielsweise form-, kraft- oder stoffflüssig miteinander verbunden oder in einem Gehäuse untergebracht oder zusammen vergossen sein.

Die Größe der zum Temperierkanal 1 weisenden Fläche F der Heizvorrichtung 2 beeinflusst die Effektivität, mit der die im Heizelement 2 erzeugte Wärme an den Temperierkanal 1 abgegeben wird. Auch hier kann die Fläche F von der ebenen Form abweichen und ähnlich ausgeformt sein, wie die zur Fläche F weisende Seitenfläche S des Temperierkanals 1. Beide Flächen S, F können so ausgeformt sein, dass die Strukturen aufweisen, die die Oberfläche der Flächen S, F vergrößern oder mit ähnlich ausgeformten Strukturelementen versehen sein. Dabei können die beiden sich gegenüberliegenden Flächen S, F zueinander komplementär ausgeformt sein. Auch kann ein die Temperaturleitfähigkeit verbesserndes Medium, wie etwa Thermoleitpaste, das beispielsweise thermisch isolierende Luft zwischen den Flächen S, F verdrängt, auf zumindest eine der beiden Flächen aufgebracht werden, bevor der Temperierkanal 1 und das Heizelement 2 in Kontakt gebracht werden

Um auch andere Wärmequellen zur Erwärmung des Temperiertluids nutzen zu können, kann die Heizvorrichtung 2 auch Bereiche aufweisen, die beispielsweise von in den anderen Wärmequellen erwärmten Gasen oder Flüssigkeiten durchströmt werden können.

Zur Kühlung des Temperierfluids kann das Heizelement 2 auch von Medien durchfließbar sein, die kälter als das Temperierfluid im Temperierkanal 1 sind. Auch kann die Heizvorrichtung selbst, beispielsweise in Form eines Peltierelements ausgestaltet sein und elektrisch oder auf andere Weise, wie etwa chemisch oder mit Hilfe komprimierter Medien, Kälte erzeugen.

Wird zur Kühlung des Temperierfluids eine separate Komponente benötigt, kann diese in Form des Kühlelementes 3 ausgestaltet sein. Das Kühlelement 3 ist hier mit einer durchgehenden Öffnung 6 gezeigt, die sich in einer senkrecht zur Längsrichtung L verlaufenden Richtung O erstreckt. In der Öffnung 6 können Wärmeverteilungselemente, beispielsweise in Form von Gittern oder Rippen, untergebracht sein, die mit dem Kühlelement wärmeleitend verbunden und von einem Kühlmittel durchströmbar sind. Insbesondere können die Wärmeverteilungselemente, wie hier gezeigt, mäanderförmig und als sogenannte Wellenrippen blechförmig ausgestaltet sein. Wenn es räumliche, funktionelle oder sonstige Rahmenbedingungen erfordern, kann sich die durchgehende Öffnung 6 auch in einer anderen Richtung, die insbesondere parallel zur Längsrichtung L verlaufen kann, erstrecken.

Die zur Heizvorrichtung 2 weisende Fläche F' des Kühlelementes 3 kann, wie auch die Flächen F, S der Heizvorrichtung 2 beziehungsweise des Temperierkanals 1, ausgeformt sein.

Die gezeigten Komponenten 1, 2 und 3 bestehen aus einem Material, insbesondere einem Metall wie etwa Aluminium, mit hoher Wärmeleitfähigkeit, das unempfindlich gegen korrosive äußere Einflüsse sein kann und/oder mit einer Schutzschicht, beispielsweise zum Korrosionsschutz, versehen werden kann.

Anschlusselemente zur Anbindung der Komponenten Temperierkanal 1, Heizelement 2 und Wärmeabgabeelement 3 an Temperierkreislauf, Energieversorgungen, Kühlmittelzuführungen, oder Steuereinrichtungen können direkt an den Komponenten ausgestaltet sein.

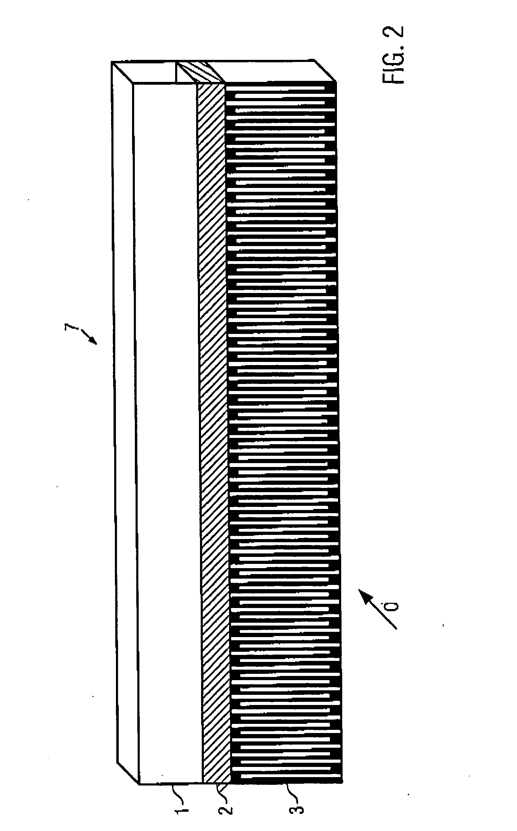

Figur 2 zeigt ein weiteres Ausführungsbeispiel, wobei für Elemente, die in Funktion und Aufbau den Elementen des Ausführungsbeispiels der Figur 1 entsprechen, dieselben Bezugsweisen verwendet werden. Der Kürze halber wird lediglich auf die Unterschiede zum Ausführungsbeispiel der Figur 1 eingegangen.

Die drei Komponenten Temperierkanal 1, Heizvorrichtung 2 und Kühlelement 3 sind hier senkrecht zur Richtung O aufeinander aufbauend zu einem Temperierstapel 7 zusammengefügt gezeigt. Die Komponenten können beispielsweise stoff-, form- oder auch kraftschlüssig, wie etwa in einem Halterahmen verspannt, miteinander verschraubt oder auch anders verbunden sein. Der Halterahmen kann die oben beschriebenen Anschluss- und/oder Dichtelemente zur Verbindung bereitstellen.

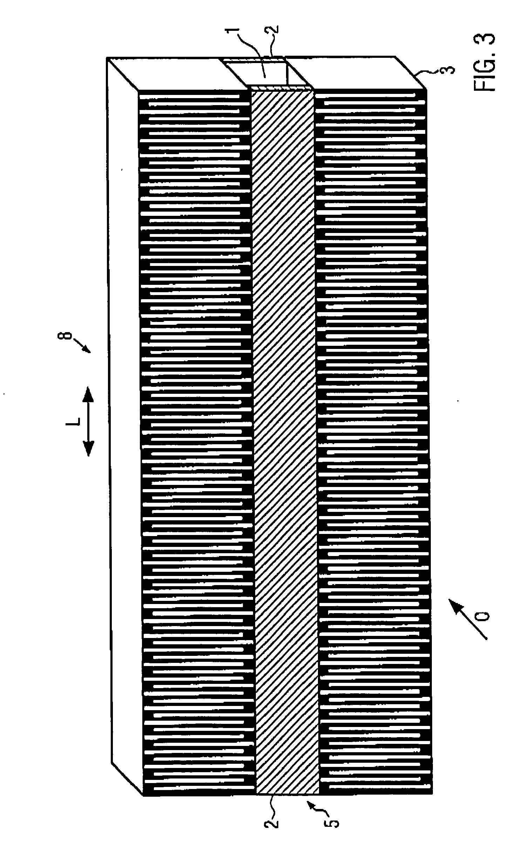

Die Anordnung der Komponenten kann von der dargestellten Reihenfolge, in der das Heizelement 2 vom Temperierkanal 1 und dem Wärmeabgabeelement 3 zweiseitig eingeschlossen ist, abweichen, was in Figur 3 gezeigt ist. In diesem dritten Ausführungsbeispiel werden für Elemente, die in Funktion und Aufbau den Elementen der Ausführungsbeispiele der Figuren 1 oder 2 entsprechen, dieselben Bezugszeichen verwendet. Der Kürze halber wird lediglich auf die Unterschiede zu den Ausführungsbeispielen der Figuren 1 und 2 eingegangen.

Beim hier dargestellten Temperierstapel 8 sind zwei Heizvorrichtungen 2 in einer Ebene mit einem Temperierkanal 1 angeordnet verbunden gezeigt, wobei die beiden Heizvorrichtungen 2 in Richtung O den Temperierkanal 1 umfassen. Je ein Kühlelement 3 überspannt die beiden Heizvorrichtungen 2 und den Temperierkanal 1 auf unterschiedlichen Seiten.

Die Komponenten 1, 2, 3 können durch einen elektrischen Isolator voneinander getrennt sein, wodurch ein unerwünschter Stromfluss zwischen den Komponenten unterdrückt ist. Der Isolator kann zwischen den Komponenten 1, 2, 3 als Isolierschicht oder -folie angeordnet sein oder die Komponenten 1, 2, 3, insbesondere das Heizelement 2, auch allseitig umhüllen, ohne Fluidströmungen oder Anschlüsse zu behindern.

Soll der unerwünschte Stromfluss ohne Isolationsschichten zwischen den Komponenten 1, 2, 3 verhindert werden, können die Komponenten 1, 2, 3 Anschlüsse aufweisen, über die an den Komponenten 1, 2, 3 entsprechende und insbesondere gleiche elektrische Potenziale anlegbar sind. Diese Anschlüsse können beispielsweise als Steckkontakte oder auch als Kontaktflächen zwischen den Komponenten 1, 2, 3 ausgeformt sein.

Alternativ können zumindest die an das Heizelement 2 angrenzenden Komponenten 1, 2, 3 aus einem elektrisch isolierenden Material gefertigt sein.

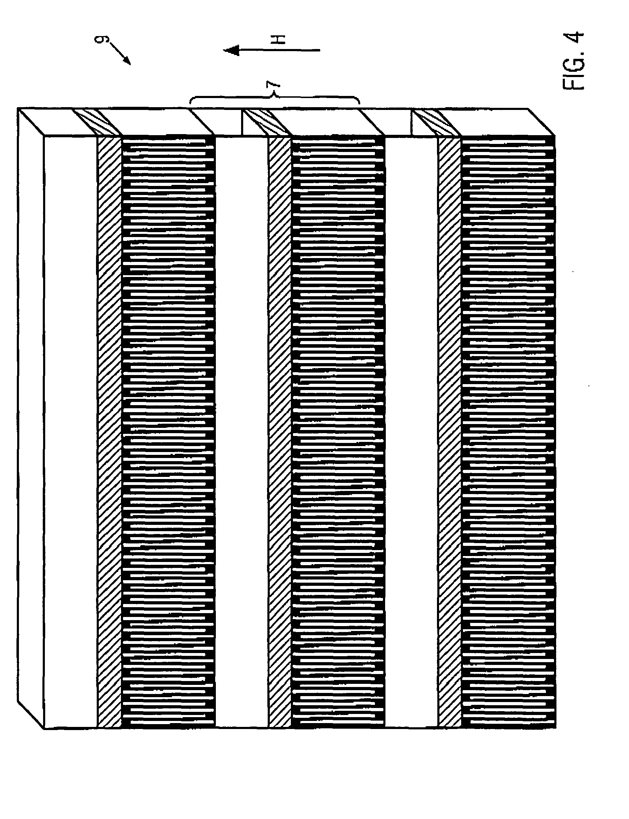

Figur 4 zeigt ein viertes Ausführungsbeispiel, wobei für Elemente, die in Funktion und Aufbau den Elementen der Ausführungsbeispiele der vorherigen Figuren entsprechen, dieselben Bezugszeichen verwendet werden. Der Kürze halber wird lediglich auf die Unterschiede zu den Ausführungsbeispielen der schon beschriebenen Figuren eingegangen.

Der hier gezeigte Temperiereinheit 9 umfasst drei in eine senkrecht zur Richtung O weisende Richtung H übereinander geschichtete Temperierstapel 7, die durch zusätzliche Temperierstapel 7, 8 oder Komponenten 1, 2, oder 3 ergänzbar sind. Die zusätzlichen Komponenten 1, 2 oder 3 oder Temperierstapel 7, 8 können der Temperiereinheit 9 in Richtung H hinzugefügt oder aufgesetzt werden oder auch senkrecht zur Richtung H vor oder hinter die Temperiereinheit 9 mit dieser in thermischen Kontakt gebracht werden. Die Temperierstapel 7, 8 beziehungsweise die Komponenten 1, 2 oder 3 können form-, stoff- oder kraftschlüssig miteinander verbunden und beispielsweise von einem Rahmen umgeben sein, der Anschlüsse zur Anbindung an elektrische Schaltkreise, Wärmetransportmedienversorgungen oder Wärmeaufnahmemedienzuführvorrichtungen bereitstellen kann.

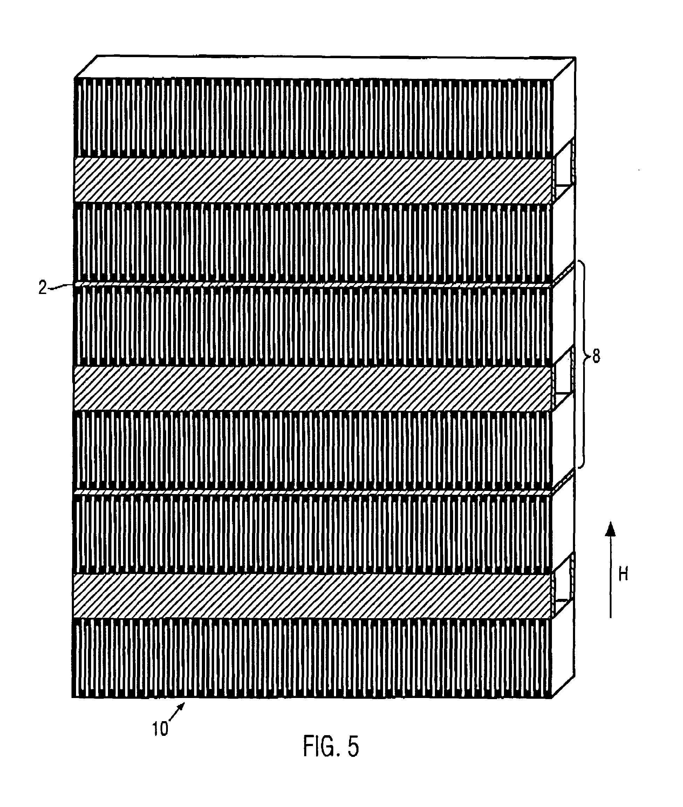

Ein fünftes Ausführungsbeispiel zeigt die Figur 5, wobei auch hier für Elemente, die in Funktion und Aufbau den Elementen der Ausführungsbeispiele der vorherigen Figuren entsprechen, dieselben Bezugszeichen verwendet werden. Der Kürze halber wird lediglich auf die Unterschiede zu den Ausführungsbeispielen der schon beschriebenen Figuren eingegangen.

Hier sind drei Temperierstapel 8 entlang der Richtung H übereinander gestapelt und jeweils durch eine zusätzliche Heizvorrichtung 2 voneinander getrennt gezeigt. Um die Temperierleistung der Temperaturregelanlage zu erhöhen, können der hier gezeigten Temperiereinheit 10 weitere Temperierstapel 7, 8 oder Komponenten 1, 2 oder 3 hinzugefügt werden. Soll die Heizleistung erhöht werden, können der Temperiereinheit 10 weitere Heizvorrichtungen 2 hinzugefügt sein. Um die Kühlleistung zu steigern, können weitere Kühlelemente 3 vorgesehen sein. Auch können die geometrischen Verhältnisse von den hier gezeigten abweichen. So kann beispielsweise die Abmessung der Kühlelemente 3 insbesondere in Richtung H variiert werden, wodurch deren Kühlleistung beeinflusst werden kann.

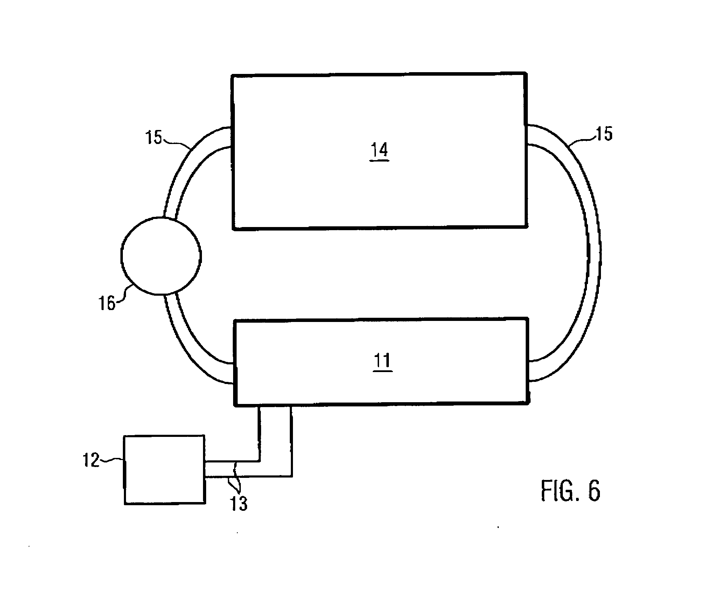

Figur 6 zeigt ein sechstes Ausführungsbeispiel, wobei auch hier für Elemente, die in Funktion und Aufbau den Elementen der Ausführungsbeispiele der vorherigen Figuren entsprechen, dieselben Bezugszeichen verwendet werden. Der Kürze halber wird lediglich auf die Unterschiede zu den Ausführungsbeispielen der schon beschriebenen Figuren eingegangen.

Die Temperiereinheit 9, 10 ist hier in einem Temperiermodul 11 integriert gezeigt. Das Temperiermodul 11 umfasst des Weiteren gegebenenfalls einen Halterahmen, der auch Montagehilfselemente und Anschlussmöglichkeiten für Medienkreisläufe oder elektrische Schaltkreise umfassen kann. Die Montagehilfselemente können beispielsweise zur Befestigung des Temperiermoduls an Montageelementen im Motorraum eines Kraftfahrzeuges oder zur Anbringung weiterer Vorrichtungen ausgestaltet sein.

Eine elektrische Versorgungseinheit 12, die einen Energiespeicher umfassen und mit einem Energiewandler verbunden sein kann, ist über Leitungen 13 zumindest mit dem Heizvorrichtungen 2 des Temperiermoduls 11 verbunden und kann diese so mit elektrischer Energie versorgen.

Der Temperierkreislauf umfasst hier das Temperiermodul 11, eine Brennstoffzelle 14 und zwei Wärmetransportleitungen 15, die das Temperiermodul 11 und die Brennstoffzelle 14 temperiermedienleitend verbinden.

Eine der Wärmetransportleitungen 15 ist durch eine Reguliereinheit 16 unterbrochen, die hier als Temperiermedienpumpe ausgebildet ist und eine Strömungsgeschwindigkeit und/oder Strömungsrichtung des Temperierfluids, beispielsweise von null bis zu einer Maximalgeschwindigkeit, beeinflussen kann.

Der Temperierkanal 1 kann hier auch als ein einzelner Temperierkanal 1 mit nur zwei offenen Enden beispielsweise mäanderförmig durch das Temperiermodul 11 geführt sein.

Ebenso kann das Temperierfluid eine Fluidsammeleinheit, die mit den Temperierkanälen 1 Fluid leitend verbunden ist, durchströmen.

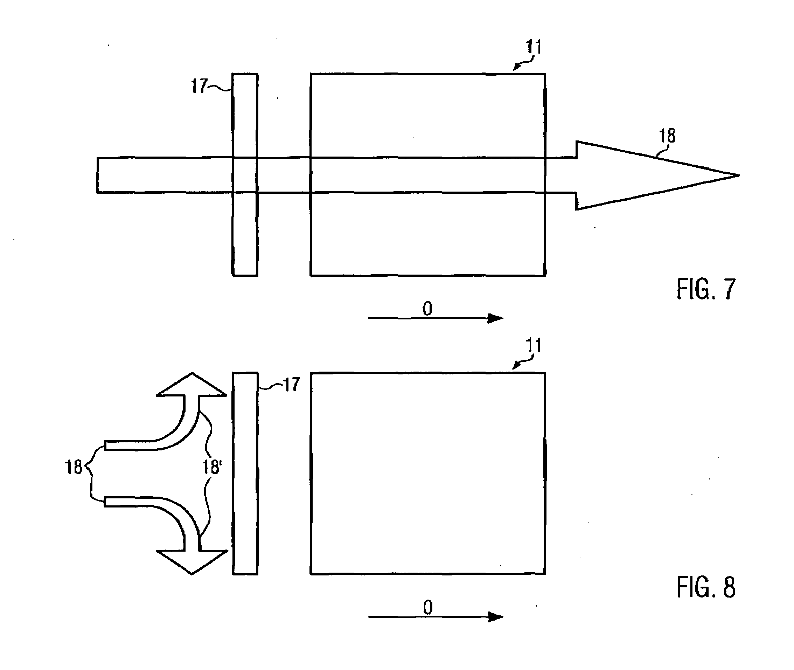

Ein siebtes Ausführungsbeispiel zeigt die Figur 7, wobei auch hier für Elemente, die in Funktion und Aufbau den Elementen der Ausführungsbeispiele der vorherigen Figuren entsprechen, dieselben Bezugszeichen verwendet werden. Der Kürze halber wird lediglich auf die Unterschiede zu den Ausführungsbeispielen der schon beschriebenen Figuren eingegangen.

Das Temperiermodul 11 ist hier von einem gasförmigen Kühlmittel durchströmt. Das Kühlmittel kann beispielsweise aus einem Gasgemisch wie Luft bestehen und wird im Wesentlichen entlang in der Richtung O verlaufenden Strömungsrichtung 18 durch die Öffnung 6 des Kühleiementes 3 geleitet. Das Kühlmittel kann auch ein Prozessgas der Brennstoffzelle 14 sein, wobei das Gasgemisch, bevor es die Brennstoffzelle 14 und gegebenenfalls auch das Temperlermodul 11 erreicht, durch in Richtung 18 vor dem Temperiermodul angeordnete Einrichtungen verdichtet und/oder dessen Feuchtigkeitsgehalt geändert wird.

Entgegen der Richtung O ist eine im Wesentlichen senkrecht zu dieser Richtung ausgerichtete Leiteinheit 17 für Kühlmittel gezeigt, die ebenfalls vom Wärmeaufnahmemedium durchströmt werden kann. Mit der Leiteinheit 17 ist der Strömungsvektor des Kühlmittels beeinflussbar. Die hier vom Temperiermodul 11 beabstandet gezeigte Leiteinheit 17 kann diese auch berühren beziehungsweise ein integraler Bestandteil des Temperiermoduls 11 sein.

Figur 8 zeigt das Ausführungsbeispiel der Figur 7, wobei die Leiteinheit 17 hier undurchlässig für das Kühlmittel eingestellt gezeigt ist. Die Strömungsrichtung 18 des Kühlmittels wird durch die Leiteinheit 17 in die senkrecht zur Richtung 18 weisende Richtung 18' geändert. Die Leiteinheit 17 kann den Strom des Kühlmittels stufenweise oder stufenlos beeinflussen. Dazu kann die Leiteinheit 17 beispielsweise über entlang einer Richtung, die im Wesentlichen senkrecht zur Richtung O verläuft, verfahrbare Riegel verfügen, durch die Strömungsbereiche der Leiteinheit 17 verkleinert oder geschlossen werden können. Der Strom des Kühlmittels kann beispielsweise auch mit Klappen, die jeweils um eine senkrecht zur Richtung O liegende Achse rotierbar sind und bei einer bestimmten Lage eine im Wesentlichen geschlossene Fläche senkrecht zur Richtung O bilden, beeinflusst werden. Wird das Kühlmittel auch als Prozessgas der Brennstoffzelle 14 verwendet, ist zu gewährleisten, dass ausreichende Mengen des Prozessgases die Brennstoffzelle 14 erreichen. Hierzu kann bei geschlossener Leiteinheit 17 das Prozessgas um das Temperiermodul 11 herum zur Brennstoffzelle 14 geleitet sein. Auch kann die Leiteinheit 17 so ausgestaltet oder eingestellt sein, dass sie immer die benötigte Menge Prozessgas durchlässt.

Auch kann die Leiteinheit 17 mit einer Fördereinheit für Kühlmittel verbunden sein, dass die Strömungsgeschwindigkeit des Kühlmittels ändern kann. Die Fördereinheit kann beispielsweise als ein Ventilator ausgebildet sein.

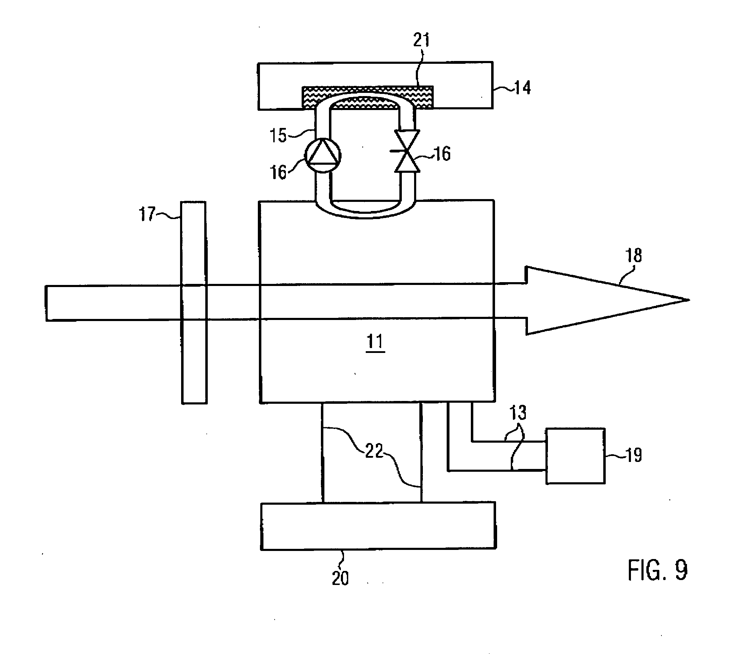

Die Figur 9 zeigt ein achtes Ausführungsbeispiel, wobei auch hier für Elemente, die in Funktion und Aufbau den Elementen der Ausführungsbeispiele der vorherigen Figuren entsprechen, dieselben Bezugszeichen verwendet werden. Der Kürze halber wird lediglich auf die Unterschiede zu den Ausführungsbeispielen der schon beschriebenen Figuren eingegangen.

Neben der Temperiereinheit 11 und der Leiteinheit 17 ist hier noch die Brennstoffzelle 14 sowie ein Energiewandler in Form eines Stromgenerators 19 und eine Steuerungseinheit 20 gezeigt. Die Brennstoffzelle 14 ist auch hier mit zwei Wärmetransportmedienleitungen 15 mit der Temperiereinheit 11 zu einem Temperierkreislauf verbunden gezeigt, der auch mehr als zwei Wärmetransportmedienleitungen 15 umfassen kann. Jedoch fließt das Temperierfluid hier nicht wie bisher durch die zu temperierenden Bereiche der Brennstoffzelle 14, sondern durch einen Wärmetauscher 21. Dieser kann in der Brennstoffzelle 14 integriert, als separate Komponente oder in dem Temperiermodul 11 angeordnet sein. Der Wärmetauscher 21 kann von einem Wärmeleitmedium durchflossen sein, das von der Brennstoffzelle 14 abzutransportierende oder ihr zuzuführende Wärme transportiert.

Eine der Wärmetransportleitungen 15 ist auch hier durch die Reguliereinheit 16, das als Pumpe für Temperiertluide ausgestaltet ist, fließfähig unterbrochen. Im Verlauf der zweiten Wärmetransportleitung 15 ist eine weitere Reguliereinheit 16 in Form eines Regelventils vorgesehen, mit dem der Strömungsquerschnitt der Wärmetransportleitung 15 im Bereich des Ventils änderbar ist. Ober elektrische Leitungen 13 ist das Temperiermodul 11 mit dem Generator 19 elektrisch leitend verbunden.

Mit dem Generator 19 kann Bewegungsenergie in elektrische Energie gewandelt werden. Der Generator 19 kann auch einen Energiespeicher der Versorgungseinheit 12 befüllen, die, beispielsweise wenn der Speicher voll ist, die überschüssige Energie an das Temperiermodul 11 beziehungsweise die Heizvorrichtung 2 weitergibt, die hier als ein Bremswiderstand fungiert. Ist der Energiespeicher leer und steht keine gewandelte Bremsenergie zur Verfügung, kann das Temperiermodul 11 auch mit der Brennstoffzelle 14 energieleitend verbunden sein. Auch der Energiespeicher kann zu seiner Befüllung mit Energie mit der Brennstoffzelle verbunden sein.

Über Steuerleitungen 22 ist die Steuerungseinheit 20 zumindest mit einem die Temperatur des Temperierfluids und/oder der Brennstoffzelle 14 messenden Temperatursensor, mit der Reguliereinheit 16, der Leiteinheit 17 und/oder der Heizvorrichtung 2 verbunden. Die Steuerungseinheit 20 kann auch zwischen die Temperieranlage und diese mit elektrischer Leistung versorgende Energiequellen leistungsregulierend geschaltet sein.

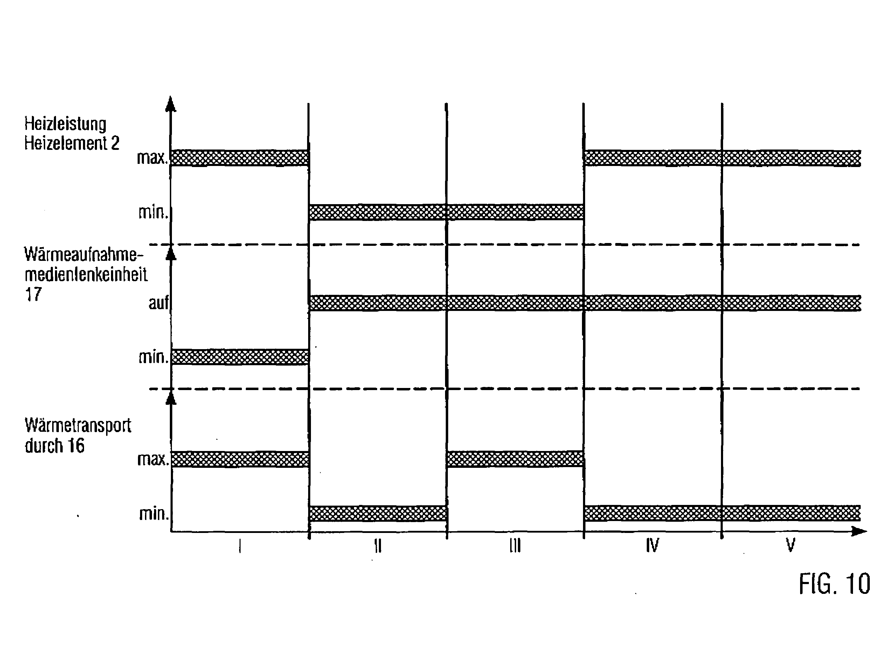

Figur 10 zeigt ein neuntes Ausführungsbeispiel, wobei für Elemente, die in Funktion und Aufbau den Ausführungsbeispielen der vorherigen Figuren entsprechen, dieselben Bezugszeichen verwendet werden. Der Kürze halber wird lediglich auf die Unterschiede zu den Ausführungsbeispielen der schon beschriebenen Figuren eingegangen.

Hier sind beispielhaft Betriebszustände der Funktionseinheiten Heizelement 2, Reguliereinheit 16 und Leiteinheit 17 in Abhängigkeit von Betriebszuständen der Brennstoffzelle 14 beziehungsweise in Abhängigkeit von anderen Erfordernissen gezeigt.

In Beispiel I liegt die Temperatur T der Brennstoffzelle 14 unter einer vorgegebenen ersten Solltemperatur Tu. Um die Brennstoffzelle 14 möglichst schnell auf eine Betriebstemperatur T oberhalb der Grenztemperatur Tu zu erwärmen, wandelt die Heizvorrichtung 2 eine vorgesehene und gegebenenfalls maximal mögliche Menge elektrischer Energie pro Zeiteinheit in Wärme und gibt diese an das Temperierfluid ab. Das so erwärmte Temperierfluid wird zur Brennstoffzelle 14 gefördert, an die es die Wärme zumindest teilweise abgibt. Dazu ist die Reguliereinheit 16 auf maximalen Wärmetransport eingestellt. Um Wärmeverluste an die Umgebung des Temperiermoduls 11 zumindest zu minimieren, ist die Leiteinheit 17 für das Kühlmittel undurchlässig eingestellt, so dass beispielsweise keine Kühlluft durch das Temperiermodul 11 strömen kann. Mit den in diesem Beispiel beschriebenen Einstellungen kann die Brennstoffzelle 14 beispielsweise in einer Startphase bei ihrer Selbsterwärmung unterstützt werden. Wird das Kühlmittel auch als Prozessgas der Brennstoffzelle 14 verwendet, ist die Leiteinheit zumindest teilweise offen, so dass ausreichend Prozessgas zur Brennstoffzelle 14 strömen kann.

In Beispiel II liegt die Temperatur T der Brennstoffzelle 14 in einem Solltemperaturbereich, der durch die erste Solltemperatur Tu und eine zweite, größere Solltemperatur To gekennzeichnet ist. Die Heizvorrichtung 2 wird nicht mit Energie versorgt, die Leiteinheit 17 lässt das Kühlmittel bzw. das Prozessgas zur Brennstoffzelle 14 fließen und die Reguliereinheit 16 fördert kein Temperierfluid beziehungsweise verschließt zumindest eine Wärmetransportleitung 15.

Falls jedoch das Wärmetransportmedium beispielsweise zur Verteilung der Wärme auch innerhalb der Brennstoffzelle 14 genutzt wird, die Temperatur der Brennstoffzelle 14 anhand der Temperatur des Wärmetransportmediums gegebenenfalls auch außerhalb der Brennstoffzelle 14 bestimmt wird oder das Wärmetransportmedium aus anderen Gründen nicht am Fließen gehindert werden soll oder kann, kann dessen Fließgeschwindigkeit auch größer als null sein.

Ist, wie im Beispiel III dargestellt, die Temperatur T der Brennstoffzelle 14 größer als die zweite Solltemperatur To wird das Heizelement 2 nicht mit Energie versorgt, die Leiteinheit 17 lässt die maximal mögliche Menge Kühlmittel zum Temperiermodul 11 strömen und die Fließgeschwindigkeit des Temperierfluids ist maximal.

In Beispiel IV liegt die Betriebstemperatur T der Brennstoffzelle 14 im Sollbereich. Der Energiespeicher des Kraftfahrzeuges kann oder soll jedoch die Bewegungsenergie, die bei einem Bremsvorgang in elektrische Energie gewandelt wird, nicht aufnehmen. Daher wir die elektrische Energie über die Heizvorrichtung 2 in Wärmeenergie gewandelt und an das durch das Temperiermodul 11 strömende Kühlmittel abgegeben. Dazu ist die Leiteinheit 17 vollständig geöffnet.

Um die optimale Temperatur T der Brennstoffzelle 14 nicht unnötig zu verändern, wird das Temperierfluid nicht durch die Reguliereinheit 16 vom Temperiermodul 11 zur Brennstoffzelle 14 geleitet.

Das Temperierfluid kann auch jetzt über eine zuschaltbare Nebenleitung des Temperierkreislaufs vorbei am Temperiermodul 11 zirkulieren.

Liegt die Betriebstemperatur T der Brennstoffzelle 14 im Solltemperaturbereich und soll nach Beispiel V ein Wärmeverbraucher oder beispielsweise der Fahrgastraum des Kraftfahrzeuges mit Wärme versorgt werden, kann der Heizvorrichtung 2 Energie zugeführt werden, die in Form von Wärme an vorbeiströmende Luft abgegeben wird. Die Wärme kann auch an ein anderes Kühlmittel, das auch über gesonderte Leitungen geführt wird, abgegeben werden.

Der Fluss des Temperierfluids vom Temperiermodul 11 zur Brennstoffzelle 14 ist gestoppt. Die Leiteinheit 17 führt das Kühlmittel zum Temperiermodul 11. Anschließend kann das erwärmte Kühlmittel zum Wärmeverbraucher weitergeleitet oder abgeführt werden.

Der Betriebszustand der Temperaturregelanlage kann von den in der Figur 10 gezeigten Beispielen abweichen. Insbesondere können die Zustände der einzelnen Funktionseinheiten Heizelement 2, Reguliereinheit 16 und/oder Wärmeaufnahmemedienlenkeinheit 17 auch zwischen den gezeigten Zuständen liegen. So kann beispielsweise das Heizelement 2 auch mit weniger als der maximalen Leistung versorgt, das Temperierfluid langsamer als mit der maximalen Geschwindigkeit gefördert und der Strom des Kühlmittels durch das Temperiermodul 11 kann nur teilweise von der Leiteinheit 17 umgelenkt werden. Diese verschiedenen Betriebszustände können durch die Kontrolleinheit 20 in Abhängigkeit von der Temperatur T der Brennstoffzelle 14 beziehungsweise von anderen Rahmenbedingungen geregelt werden.

## Patentansprüche

1. Temperaturregelanlage für Brennstoffzellen (14), mit wenigstens einer elektrischen Heizvorrichtung (2) und mit zumindest einem Kühlelement (3), wobei die Heizvorrichtung (2) und das Kühlelement (3) über eine Wärmebrücke mit mindestens einem die Temperaturregelanlage durchsetzenden Temperierkanal (1) verbunden sind, der Temperierkanal (1) Fluid leitend mit einer von einem ein Temperierfluid leitenden Temperierkreislauf zumindest zwischen der Temperaturregelanlage und der Brennstoffzelle (14) gebildeten Wärmetransportleitung (15) verbindbar ist **dadurch gekennzeichnet, dass** der Temperierkanal (1), das Kühlelement (3) und die Heizvorrichtung (2) einen Temperierstapel (7, 8) ausbildend zusammengefügt sind.

2. Temperaturregelanlage nach Anspruch 1, **dadurch gekennzeichnet, dass** der Temperierkanal (1), das Kühlelement (3) und die Heizvorrichtung (2) stapelförmig übereinander entlang einer Längsrichtung (L) des Temperierkanals (1) den Temperierstapel (7, 8) ausbildend angeordnet sind.

3. Temperaturregelanlage nach Anspruch 1 oder 2, **dadurch gekennzeichnet, dass** zwei Heizvorrichtungen (2) und zwei Kühlelemente (3) den Temperierkanal (1) den Temperierstapel (7, 8) ausbildend umfassen und die beiden Heizvorrichtungen (2) auf unterschiedlichen Seiten des Temperierstapels (7, 8) angeordnet sind.

4. Temperaturregelanlage nach einem der Ansprüche 1 bis 3, **dadurch gekennzeichnet, dass** der Temperierstapel (7, 8) wenigstens eine weitere Heizvorrichtung (2) oder mindestens ein weiteres Kühlelement (3) umfasst.

5. Temperaturregelanlage nach einem der Ansprüche 1 bis 4, **dadurch gekennzeichnet, dass** die Temperaturregelanlage ein Temperiermodul (11) mit mehreren übereinander und in einer gemeinsamen Richtung angeordneten Temperierstapeln (7, 8) umfasst.

6. Temperaturregelanlage nach Anspruch 5, **dadurch gekennzeichnet, dass** das Temperiermodul (11) einen Temperierkanal (1) umfasst, der mäanderförmig durch das Temperiermodul (11) verläuft.

7. Temperaturregelanlage nach Anspruch 5 oder 6, **dadurch gekennzeichnet, dass** das Temperiermodul (11) geradlinig oder gekrümmt verlaufend ausgebildet ist.

8. Temperaturregelanlage nach einem der Ansprüche 1 bis 7, **dadurch gekennzeichnet, dass** die Heizvorrichtung als Bremswiderstand ausgestaltet ist.

9. Temperaturregelanlage nach einem der Ansprüche 1 bis 8, **dadurch gekennzeichnet, dass** die Wärmetransportleitung (15) mindestens eine den Wärmefluss steuernde Reguliereinheit (16) aufweist, mit der eine Strömungsgeschwindigkeit eines Temperierfluids steuerbar ist.

10. Temperaturregelanlage nach einem der Ansprüche 1 bis 9, **dadurch gekennzeichnet, dass** die Temperaturregelanlage eine Leiteinheit (17) zur Änderung des Strömungsvektors eines die Wärmeenergie des Kühlelements (3) aufnehmenden Kühlmittels aufweist.

11. Temperaturregelanlage nach einem der Ansprüche 1 bis 10, **dadurch gekennzeichnet, dass** eine Steuerungseinheit (20) zumindest mit wenigstens einem eine Betriebstemperatur (T) der Brennstoffzelle (14) erfassenden Temperatursensor, der Heizvorrichtung (2), der Reguliereinheit (16) und/oder der Leiteinheit (17) steuerbar verbunden ist.

12. Temperaturregelanlage nach einem der Ansprüche 1 bis 11, **dadurch gekennzeichnet, dass** die Temperaturregelanlage noch mit weiteren im Kraftfahrzeug angeordneten Wärmeerzeugern und/oder -verbrauchern Wärme regulierend verbindbar ist.

13. Verfahren zum Regeln einer Betriebstemperatur einer Brennstoffzelle, bei dem ein Wärmefluss von einer Heizvorrichtung (2) über eine Wärmetransportleitung (15) zur Brennstoffzelle (14) geleitet und die Heizvorrichtung (2) aus einer elektrischen Energiequelle oder einem Energiespeicher gespeist wird, wenn die Betriebstemperatur unterhalb einer ersten Solltemperatur (Tu) liegt, und bei dem beim Überschreiten einer zweiten Solltemperatur (To) der Wärmefluss von der Brennstoffzelle (14) über die Wärmetransportleitung (15) an ein Kühlelement (3) geleitet wird **dadurch gekennzeichnet, dass** der Wärmefluss über wenigstens eine Temperaturregelanlage (7, 8) nach einem der Ansprüche 1 bis 12 geleitet wird.

14. Verfahren nach Anspruch 13, **dadurch gekennzeichnet, dass** die Energie zum Betreiben der Heizvorrichtung (2) der Bewegungsenergie eines Kraftfahrzeuges beim Bremsvorgang entzogen wird.

15. Brennstoffzelle (14), **dadurch gekennzeichnet, dass** die Brennstoffzelle (14) eine als ein luftgekühlter Kühler für ein Kraftfahrzeug nach einem der Ansprüche 1 bis 12 ausgestaltete Temperaturregelanlage umfasst.
